**Europäisches Patentamt**

**European Patent Office**

**Office européen des brevets**

(11) Publication number : **0 402 912 B1**

# EUROPEAN PATENT SPECIFICATION

(45) Date of publication of patent specification :
09.08.95 Bulletin 95/32

(51) Int. Cl.⁶ : **G11B 5/596, G11B 20/12**

(21) Application number : **90111227.6**

(22) Date of filing : **13.06.90**

(54) **Disk memory system.**

(30) Priority : **13.06.89 JP 151020/89**
**30.09.89 JP 255480/89**

(43) Date of publication of application :
**19.12.90 Bulletin 90/51**

(45) Publication of the grant of the patent :
**09.08.95 Bulletin 95/32**

(84) Designated Contracting States :
**DE FR GB**

(56) References cited :
**FR-A- 2 578 346**
**US-A- 4 001 883**
**US-A- 4 016 603**
**PATENT ABSTRACTS OF JAPAN vol. 11, no.**
**40 (P-544)(2487) 5 February 1987, & JP-A-61**
**208675 (MATSUSHITA) 17 September 1986,**
**PATENT ABSTRACTS OF JAPAN vol. 7, no.**
**192 (P-218)(1337) 23 August 1983, & JP-A-58**
**91512 (HITACHI) 31 May 1983,**
**PATENT ABSTRACTS OF JAPAN vol. 9, no.**
**163 (P-371)(1886) 9 July 1985, & JP-A-60 40570**
**(HITACHI) 2 March 1985,**

(73) Proprietor : **SONY CORPORATION**
**7-35, Kitashinagawa 6-chome**
**Shinagawa-ku**
**Tokyo (JP)**

(72) Inventor : **Saito, Takehiko, c/o SONY**
**CORPORATION**
**7-35, Kitashinagawa 6-chome**
**Shinagawa-ku, Tokyo (JP)**
Inventor : **Eguchi, Tatsuo, c/o SONY**
**CORPORATION**
**7-35, Kitashinagawa 6-chome**
**Shinagawa-ku, Tokyo (JP)**

(74) Representative : **Müller, Frithjof E., Dipl.-Ing.**
**Patentanwälte**
**TER MEER-MÜLLER-STEINMEISTER &**
**PARTNER**
**Mauerkircherstrasse 45**
**D-81679 München (DE)**

EP 0 402 912 B1

## Description

This invention relates to disk memory systems such as magnetic disk devices, and more particularly to an improvement of the tracking operation of a disk memory system.

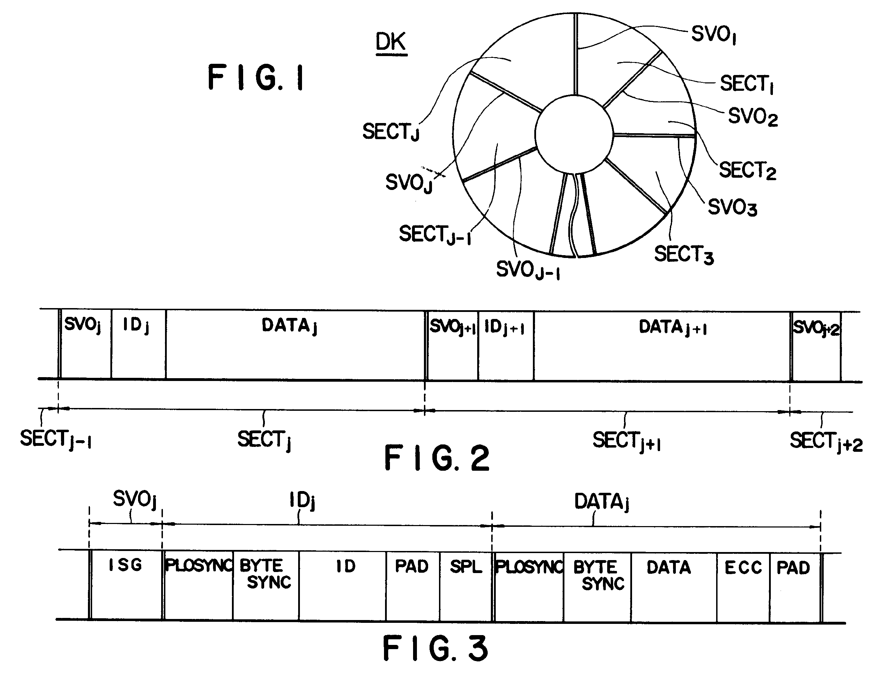

A conventional disk memory system such as a hard disk device and a floppy disk device, as shown in FIG. 1, has a plurality of recording tracks arranged coaxially on a disk DK, and each recording track is provided with J sectors $SECT_j$ (j = 1, 2,.... and J).

In order to read the sectors $SECT_1$ through $SECT_J$, tracking and accessing operations must be carried out with high accuracy. For this purpose, servo information SVO of the order of 50 bytes is written, as tracking information, at the top of each sector in advance, so that in a write mode of writing data or in a read mode of reading data, the actuator motor for moving the magnetic head is servo-controlled according to the servo information SVO, thereby to make access to the aimed one of the recording tracks. The servo information SVO is such as described in the specification of USP 4032984 for instance.

A second disk memory system, as disclosed in US-A-4,001,883, comprises a plurality of disks which are mounted upon a common shaft. The data is stored on circular tracks on the surface of the disks. Typically, one disk surface contains servo control and clocking information. Each track is divided into several sectors, each sector being provided with its own identification header which precedes the sector on its record track. In order to increase data density this document teaches to increase the number of sectors without increasing the amount of identification data by grouping a plurality of sectors with a single header. Since this disk system uses a seperate dedicated servo disk no servo control information is comprised in the data sectors.

In the first mentioned conventional disk memory system, as shown in FIG. 2, each sector $SECT_j$ (j = 1, 2,... and J) has a servo information record zone $SVO_j$ (j = 1, 2, .... and J) at top, which is followed by an identification information record zone $ID_j$ and a data information record zone $DATA_j$ (j = 1, 2, .... and J). Data in a data format as shown in FIG. 3 are assigned to the servo information record zone $SVO_j$, identification information record zone $ID_j$ and data information record zone $DATA_j$.

In FIG. 3, an inter-sector gap ISG for segregating adjacent sectors is employed as the servo information record zone $SVO_j$. Servo data is read from part of the inter-sector gap ISG to control the servo mechanism of the actuator for the disk device, thereby to position the magnetic head with respect to the disk DK.

In the identification information record zone $ID_j$, the following data are assigned in the stated order: PLL synchronizing data PLO SYNC for operating a PLL (phase locked loop) oscillation circuit provided in a data processing circuit section of the disk device in synchronization with the data transmitting speed of the disk DK, to produce a data reading reference clock signal; byte synchronizing data BYTE SYNC including one byte in a particular pattern for byte synchronization with identification data; the identification data ID representing information such as the cylinder number, head number and sector number of the concerning sector $SECT_j$; dummy data PAD for adjusting the timing of transmission of data and the delay of time in a data processing operation by the data processing circuit section; and inter-information gap SPL representing the fact that identification information has been transmitted and data information will be transmitted.

In the data information record zone $DATA_j$, the following data are assigned in the stated order: PLL synchronizing data PLO SYNC for synchronously operating a PLL oscillation circuit for a pickup circuit; byte synchronization data BYTE SYNC for byte synchronization of read/write data; read/write data DATA; data ECC added for read/write data error detection/correction; and dummy data PAD for adjusting the delay of time in a data processing operation by the data processing circuit section.

In the case where, with the data format as shown in FIG. 3, thirty-two (32) sectors are to be assigned per recording track under the conditions that data transfer rate $R_t$ = 10 (Mbps) and disk revolution number N = 60 (rps), the number of bytes B per sector is:

$$B = (1/8)(R_t/(N \ j)) = 651 \text{ (bytes)} \quad (1)$$

Therefore, in the case where the number of bytes (I) of read/write data DATA is set to 512 (I = 512), in order to read and write 512 bytes of read/write data DATA, in addition to the read/write data DATA 139 bytes is required as redundant bytes such as the above-described PLO SYNC, BYTE SYNC, ID and ECC as is apparent from the following equation (2):

$$B - I = 641 - 521 = 139 \text{ (bytes)} \quad (2)$$

Therefore, the record efficiency of the read/write data DATA is as follows:

$$I/B = 512/651 = 78 \ (\%) \quad (3)$$

Thus, in the case where, with the format as shown in FIG. 3, data of the order of 512 bytes is to be read from and written in each sector $SECT_j$ (j = 1, 2,.... and J) as read/write data for the sector, about 20% redundant bytes must be read and written together with the read/write data DATA.

The tracking accuracy and access time of the servo mechanism section for the disk device depend on the number of servo information record zones $SVO_j$ (j = 1, 2, ... and J) of each track. As the number of servo information record zones increases, the number of servo error correcting circuits is increased, as a result the tracking accuracy is improved while the access time is decreased, and the servo performance is improved accordingly.

One example of a method of improving the servo performance in this manner may be as follows: The number of bytes of read/write data DATA per sector is divided into a plurality of parts, for instance two parts. Each of the parts thus obtained is assigned as the read/write data DATA in the data format shown in FIG. 3, so as to be read and written as data for one sector.

According to the method, the number of sectors per record track is increased; that is, by increasing the number of sectors, the frequency of detecting the servo signal per revolution of the disk is increased, and the servo performance is improved as much.

However, the method suffers from a difficulty that, in the data format shown in FIG. 3, the ratio of the read/write data DATA to the quantity of data of one sector (i.e. data record efficiency) is decreased.

Let us consider the case for instance where, in the data format of FIG. 2, the number of bytes I of the read/write data is set to a half of that which has been described above; i.e., I = 256. The number of redundant bytes (139 bytes) described with reference to Equation (2) is control data required for the reading or writing of the read/write data DATA of one sector. Therefore, even if the read/write data DATA is reduced to half, the control data for one sector cannot be decreased as long as a data format for one sector is assigned for the read/write data DATA. Accordingly, in the case where the read/write data DATA is reduced to half (I = 256 bytes), the ratio of the resultant read/write data DATA to the total data is:

$$I/B = 256/(139 + 256) = 256/395 = 64 \, (\%) \quad (4)$$

That is, the data record efficiency is much lower than that in the case of Equation (3). This means that the recording capacity of the disk DK is not effectively utilized

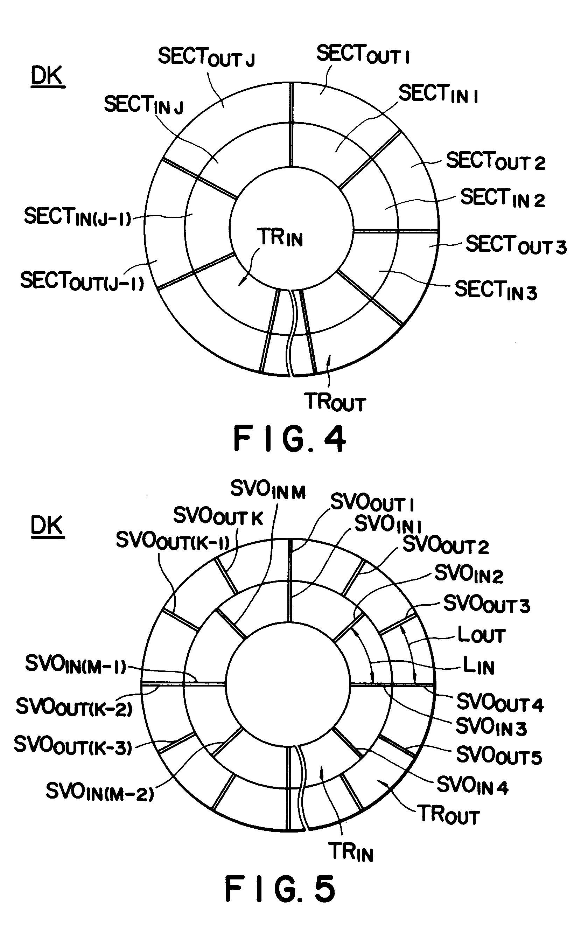

Let us consider the case where a plurality of recording tracks are formed according to the format shown in FIG. 3. In the case where, as shown in FIG. 4, a disk is rotated at a constant speed, and the same amount of data is recorded at the same data transfer rate in each of the sectors $SECT_{OUTj}$ and $SECT_{INj}$ (j = 1, 2,.... and J) which are formed in outer and inner recording tracks $TR_{OUT}$ and $TR_{IN}$, respectively, those sectors in the inner and outer recording tracks $TR_{IN}$ and $TR_{OUT}$ are different in length. Hence, the sectors are lower in record density towards the outermost recording track, and accordingly the recording regions cannot be effectively utilized.

This problem may be solved as follows: The data record density of the outer recording track $TR_{OUT}$ is made equal to that of the inner recoding track $TR_{IN}$ by increasing the data transfer rate of the outer recording track $TR_{OUT}$. That is, the problem can be solved by employing a so-called "zone recording system".

In the system, the disk area is divided radially into several recording areas so that the number of sectors per track is larger towards the outermost recording area. For instance, as shown in FIG. 5, on which the two-part form of appended claim 1 is based, the disk DK is divided into two recording areas, outer and inner recording areas; and the lengths $L_{OUT}$ and $L_{IN}$ of the sectors of the outer and inner recording tracks $TR_{OUT}$ and $TR_{IN}$ in the outer and inner recording regions are made equal, and the data recording rate of the outer recording area is made higher, so that the sectors of the outer and inner recoding areas are equal in data record density to one another. In this case, the total amount of record data of the disk DK can be increased.

However, the system is still disadvantageous in the following points: The number of servo information record zones $SVO_{OUTk}$ (k = 1, 2,... and K) formed between adjacent sectors in the outer record track $TR_{OUT}$ is different from the number of servo information record zones $SVO_{INm}$ (m = 1, 2,... and M) formed between adjacent sectors in the inner record track $TR_{IN}$. Therefore, the inner and outer recording tracks are different in servo information sampling rate and in sampling timing from each other, and it is necessary to provide servo information detecting circuits in correspondence to the number of recording area. As a result, the disk memory system is unavoidably intricate in arrangement. Thus, the system cannot sufficiently solve the problem.

## SUMMARY OF THE INVENTION

In view of the foregoing, an object of this invention is to provide a disk memory system in which, while the data record efficiency of the read/write data is maintained substantially unchanged, the frequency of detecting servo signals per revolution of the disk is increased, and the servo performance is remarkably improved.

Another object of the invention is to provide a magnetic disk device in which data recording efficiency is improved by recording data in such a manner that the inner and outer recording areas of the disk are substantially equal in record density, and tracking servo signals are detected from the servo sectors arranged radially with equal sampling timing at all times.

The foregoing objects and other objects of the invention have been achieved by the provision of

a disk memory system which comprises: transducer means for reading and writing information on a disc; at least one disk medium having a plurality of concentrically and radially displaced areas each of which has a plurality of concentric tracks, data transfer rates for the area being substantially in proportion to radial offset from the center of the disk medium, each of the concentric data tracks being divided into plural data sectors and plural servo zones therebetween, the concentric data tracks for each area being divided into the data sectors grouped different in number and the servo zones therebetween, each of the data sectors having identification information which is prerecorded and only read by the transducer means, and data information and error correction information both of which are recorded and read by the transducer means together, each of the servo zones having servo information which is prerecorded and only read by the transducer means, each of the data sectors being further divided into one identification record zone having identification data and plural sub-data sectors into which the data information and error correction information are distributed, additional servo zones being provided between the sub-data sectors and having additional servo information therein which is prerecorded and only read by the transducer means; the data sectors for each area being divided into the sub-data sectors different in number in such a manner that positions of the servo zones and additional servo zones are radially aligned throughout the areas; spindle motor means for rotating the disc medium at a predetermined angular velocity; positioning means for positioning the transducer means on a selected one of the concentric tracks; and positioning control means for receiving the servo information and the additional servo information read by the transducer means and for controlling the positioning means so that the transducer means is positioned precisely on the selected one of the concentric tracks.

The nature, principle and utility of the invention will become more apparent from the following detailed description when read in conjunction with the accompanying drawings in which like parts are designated by like reference numerals or characters.

BRIEF DESCRIPTION OF THE DRAWINGS

In the accompanying drawings:

FIG. 1 is a plan view showing a conventional disk;

FIG. 2 is an explanatory diagram outlining the arrangement of a record zone of the conventional disk;

FIG. 3 is an explanatory diagram outlining a conventional data format;

FIGS. 4 and 5 are plan views for a description of problems to be solved by the invention;

FIG. 6 is a plan view showing a disk employed in one example of a disk memory system according to this invention;

FIG. 7 is an enlarge view showing a part of a servo information record zone of the disk;

FIG. 8 is an explanatory diagram showing a record zone of an outer record track;

FIG. 9 is an explanatory diagram showing a data format of the record zone shown in FIG. 8;

FIG. 10 is an explanatory diagram showing the arrangement of insertion servo data;

FIG. 11 is an explanatory diagram showing a record zone of an inner record track;

FIG. 12 is an explanatory diagram showing a data format of the record zone shown in FIG 11;

FIG. 13 is a block diagram showing the one example of disk memory system according to the invention;

FIG. 14 is a waveform diagram for a description of the data read/write operation of the disk memory system; and

FIG. 15 is a block diagram showing a byte data processing circuit in FIG. 13.

DETAILED DESCRIPTION OF THE INVENTION

Preferred embodiments of this invention will be described with reference to the accompanying drawings:

Arrangement of Data Format

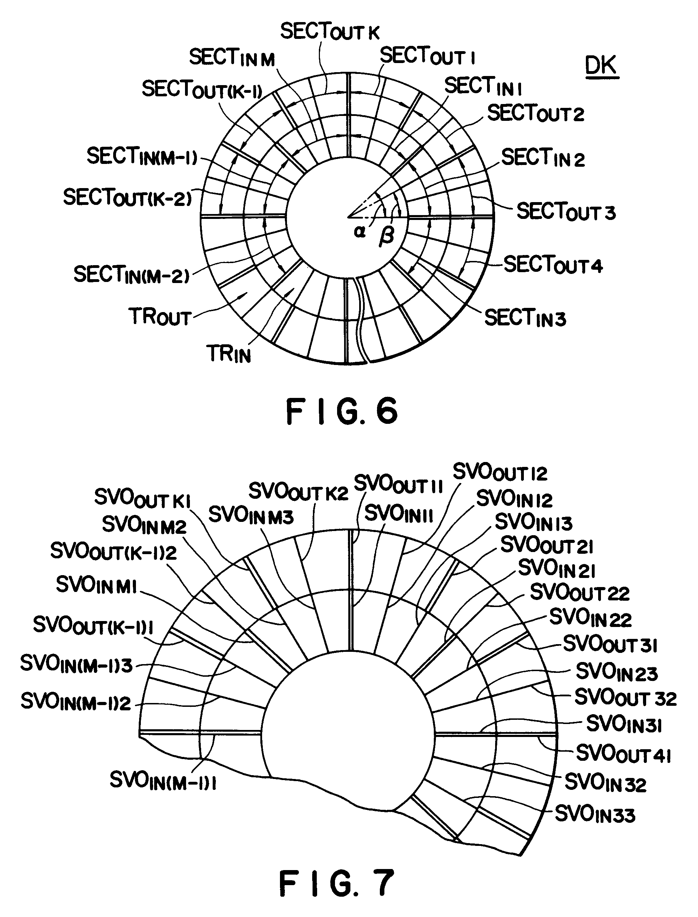

As shown in FIG. 6, a disk DK has a plurality of recording areas (in this case, two recording areas, namely, outer and inner recording areas). The outer and inner recording areas include record tracks $TR_{OUT}$ and $TR_{IN}$ arranged coaxially, respectively. In the outer and inner record tracks, K sectors $SECT_{OUTk}$ (k = 1, 2,... and K) and M sectors $SECT_{INm}$ (m = 1, 2,... and M) are arranged, respectively.

As shown in FIG. 7, in the outer and inner record area tracks $TR_{OUT}$ and $TR_{IN}$, servo information record zones $SVO_{OUTXY}$ and $SVO_{INXY}$ (X = 1, 2,...K, and Y = 1, 2......) are aligned radially of the disk DK. Servo information written in the servo information record zones may be such as described in the specification of USP 4031984.

In this embodiment, the outer record track $TR_{OUT}$ is made up of sixty-three (63) sectors, whereas the inner record track $TR_{IN}$ forty-two (42) sectors.

The border line between the two recording areas is the circumference whose radius is 1.5 times the radius of the innermost track in the inner record area.

Accordingly, the sector forming angle $\alpha$ of the inner record tracks is 1.5 times that $\beta$ of the outer record track. Under the condition that the disk DK is rotated at constant speed, the inner area record track $TR_{IN}$ is so designed as to conform to a data transfer rate 10 Mbps, while the outer area record track $TR_{OUT}$ is so designed as to conform to a data transfer rate 15 Mbps. Thus, all the sectors of the outer and inner record area tracks $TR_{OUT}$ and $TR_{IN}$ are equal in data record density to one another.

In the outer record area track $TR_{OUT}$, the sectors $SECT_{OUTk}$ (k = 1, 2, .... and K) are defined by the servo information record zones $SVO_{OUTk1}$ (k = 1, 2,..... K), and each sector $SECT_{OUTk}$ is divided by a servo information record zone $SVO_{OUTk2}$ (k = 1, 2,.. and K) into two parts.

In the inner record track $TR_{IN}$, the sectors $SECT_{INm}$ (m = 1, 2,... and M) are defined by the servo information record zones $SVO_{INm1}$ (m = 1, 2,... and M), and each sector SECT$_{INm}$ is divided by two servo information record zones SVO$_{INm2}$ and SVO$_{INm3}$ (m = 1, 2,... and M) into three parts.

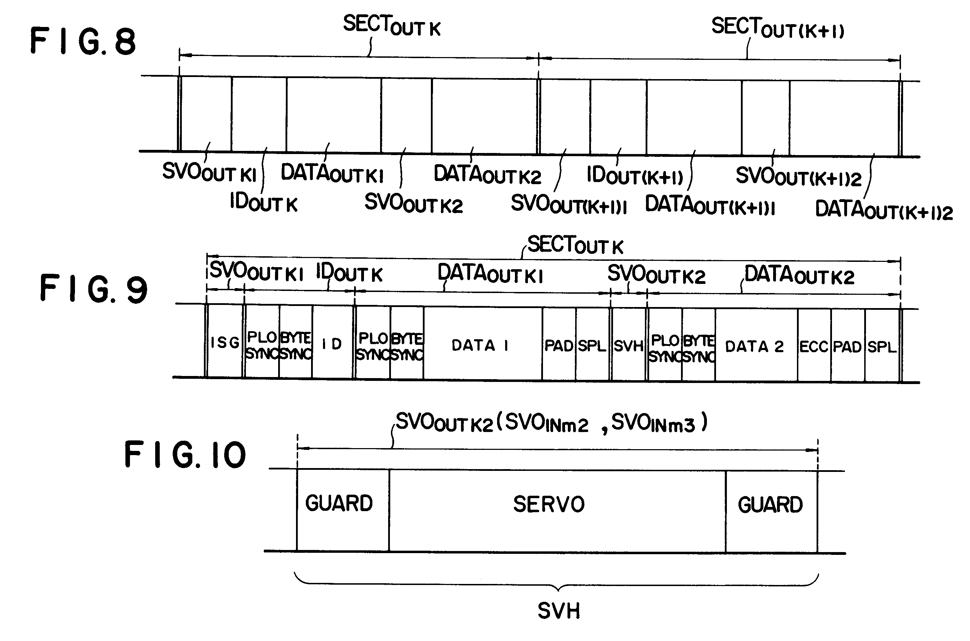

Accordingly, in the outer record track TR$_{OUT}$, as shown in FIG. 8 a first servo information record zone SVO$_{OUTk1}$, identification information record zone ID$_{OUTk}$, first data information record zone DATA$_{OUTk1}$, second servo information record zone SVO$_{OUTk2}$, second data information record zone DATA$_{OUTk2}$ are arranged in the stated order to form a sector SECT$_{OUTk}$.

The first servo information record zone SVO$_{OUTk1}$ and the identification information record zone ID$_{OUTk}$ correspond to the servo information record zone SVO$_j$ and identification information record zone ID$_j$ described with reference to FIGS. 1 through 3, and as shown in FIG. 9 the same data as described with reference to FIG. 3 (the prior art) are recorded therein.

That is, a servo signal is recorded in part of the first servo information record zone SVO$_{OUTk1}$.

The PLL synchronizing data PLO SYNC, byte synchronizing data BYTE SYNC, and identification data ID are recorded in the identification information record zone ID$_{OUTk}$ in the stated order.

In the case of FIG. 9, the first and second sub read/write data DATA1 and DATA2 which are obtained by dividing into first and second halves the read/write data DATA (FIG. 3) assigned to the data information record zone DATA$_j$ described with reference to FIG. 1 are recorded in the first and second data information record zones DATA$_{OUTk1}$ and DATA$_{OUTk2}$, respectively. And the second servo information record zone SVO$_{OUTk2}$ is provided between the first and second data information record zones.

More specifically, the PLL synchronizing data PLO SYNC, byte synchronizing data BYTE SYNC, first sub read/write data DATA1, dummy data PAD, and inter-information gap SPL are recorded in the first data information record zone DATA$_{OUTk1}$ in the stated order.

On the other hand, the PLL synchronizing data PLO SYNC, byte synchronizing data BYTE SYNC, second sub read/write data DATA2, error detecting/correcting data ECC, dummy data PAD and inter-information gap SPL are recorded in the second data information record zone DATA$_{OUTk2}$ in the stated order.

An insertion servo signal SVH having a predetermined number of bytes (50 bytes for instance) is recorded in the second servo information record zone SVO$_{OUTk2}$ between the first and second data information record zones DATA$_{OUTk1}$ and DATA$_{OUTk2}$.

The insertion servo signal SVH, as shown in FIG. 10, includes a delay adjusting dummy GUARD, and a servo signal SERVO.

The identification data ID includes the start and end position information of the second servo information record zone SVO$_{OUTk2}$ in addition to the cylinder number, head number and sector number of that sector, so that, when the reading of data from the identification data ID starts, the position of the second servo information record zone SVO$_{OUTk2}$ is detected in advance which separates the first and second data information record zones DATA$_{OUTk1}$ and DATA$_{OUTk2}$.

In practice, the byte number (256 in the embodiment) of data recorded in the first data information record zone DATA$_{OUTk1}$ is provided as the start and end position information of the second servo information record zone in the sector.

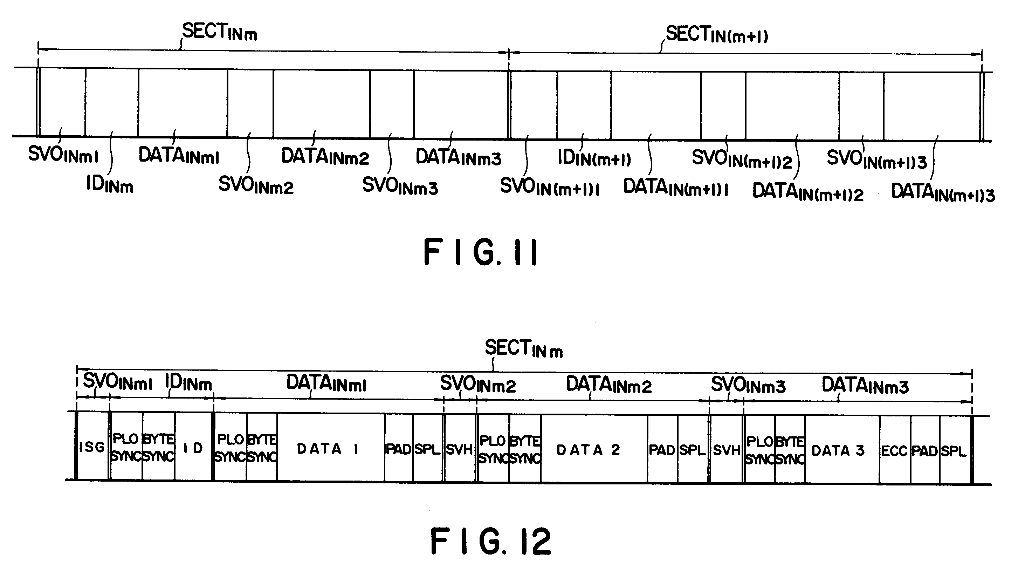

On the other hand, in the inner record area track TR$_{IN}$, as shown in FIG. 11 first servo information record zone SVO$_{INm1}$, identification information record zone ID$_{INm}$, first data information record zone DATA$_{INm1}$, second servo information record zone SVO$_{INm2}$, second data information record zone DATA$_{INm2}$, third servo information record zone SVO$_{INm3}$, and third data record zone DATA$_{INm3}$ are arranged in the stated order, thus forming a sector SECT$_{INm}$.

As shown in FIG. 12, the first servo information record zone SVO$_{INm1}$ and the identification information record zone ID correspond to the servo information record zone SVO$_{OUTk1}$ and identification information record zone ID$_{OUTk}$ of the outer record area track TR$_{OUT}$ which have been described with reference to FIGS. 10 and 9, and the same data are recorded therein.

The first, second and third sub read/write data DATA1, DATA2 and DATA3 which are obtained by dividing three parts the read/write data DATA (FIG. 3) assigned to the data information record zone DATA$_j$ described with reference to FIGS. 1 through 3 are recorded in the first, second and third data information record zones DATA$_{INm1}$ through DATA$_{INm3}$, and the second and third servo information record zones SVO$_{INm2}$ and SVO$_{INm3}$ are arranged between those zones.

In the first (or second) data information record zone DATA$_{INm1}$ (or DATA$_{INm2}$), PLL synchronizing data PLO SYNC, byte synchronizing data BYTE SYNC, first sub read/write data DATA1 (or second sub read/write data DATA2), dummy data PAD, and inter-information gap SPL are recorded in the stated order.

And in the third data information record zone DATA$_{INm3}$, PLL synchronizing data PLO SYNC, byte synchronizing data BYTE SYNC, third sub read/write data DATA3, error detecting/correcting data ECC, dummy data PAD, and inter-information gap SPL are recorded in the stated order.

The insertion servo data SVH as described with reference to FIG. 10 is recorded in the second and third servo information record zones SVO$_{INm2}$ and SVO$_{INm3}$ provided between the first, second and third data information record zones DATA$_{INm1}$, DATA$_{INm2}$ and DATA$_{INm3}$.

The start and end position information of the second and third servo information record zones SVO$_{INm2}$ and SVO$_{INm3}$ is recorded in the identification information record zone $ID_{INm}$ in addition to the cylinder number, head number and sector number of that section, so that, when the reading of data from the identification information record zone $ID_{INm}$ starts, the positions of the second and third servo information record zones $SVO_{INm2}$ and $SVO_{INm3}$ separating the first, second and third data information record zones $DATA_{INm1}$, $DATA_{INm2}$ and $DATA_{INm3}$ are detected in advance.

In practice, the byte number (171 in the embodiment) of data which is recorded in the first and second data information record zones $DATA_{INm1}$ and $DATA_{INm2}$ is provided as the position information of the second and third servo information record zones in the sector.

As is apparent from the above description, the data format is formed by providing a plurality of servo information record zones in a sector. Therefore, in the case where the sector forming angles $\beta$ and $\alpha$ are changed in the outer and inner record tracks $TR_{OUT}$ and $TR_{IN}$, the servo information record zones can be aligned radially of the disk DK.

Hence, with the disk DK rotating at constant speed, it is unnecessary to change the servo information sampling rate and sampling timing of the outer record track $TR_{OUT}$ from those of the inner record track $TR_{IN}$. This will eliminate the above-described difficulty that the necessity of provision of a plurality of servo information detecting circuits makes the magnetic disk device intricate in construction.

Arrangement of the Disk Memory System

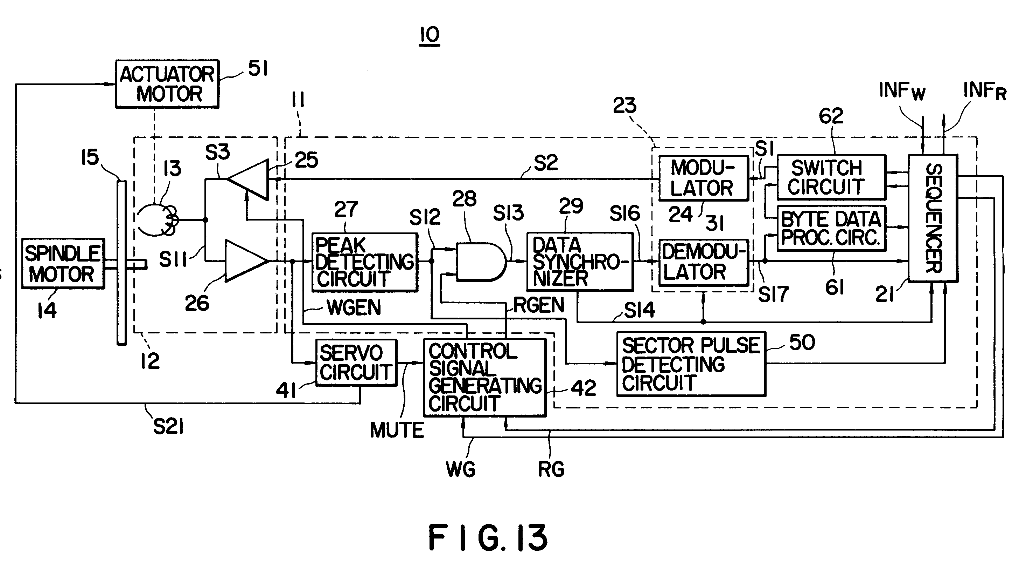

A disk memory system 10 as shown in FIG. 13 can be used for performing the reading and writing of a plurality of sub read/write data $DATA_k$ by using the data format shown in FIGS. 8 through 12.

As shown in FIG. 13, in the disk memory system 10, a read/write data processing circuit 11 is operated so that data are written in or read from a disk 15 through a read/write circuit 12 and a magnetic head 13. The disk 15 is turned by a spindle motor 14.

More specifically, in a write mode, the read/write data processing circuit 11 operates as follows: A sequencer 21 outputs a write signal S1 according to write information $INF_w$ applied externally thereto, and the write signal is modulated into write data S2 by a modulator 24 in a modem unit 23. The write data S2 is supplied, as a write signal S3, to the magnetic head 13 through a write amplifier circuit 25 in the read/write circuit 12, so that it is written in the disk 15.

On the other hand, in a read mode, the magnetic head 13 picks up a read signal S11 from the disk 15. The read signal S11 is applied through a read amplifier circuit 26 to a peak detecting circuit 27 in the read/write processing circuit 11, where it is subjected to differentiation and zero-cross detection, thus providing a read data S12. The read data S12 is applied through an AND gate circuit 28, as an AND gate output S13, to a data synchronizer 29.

The data synchronizer 29, in response to the PLL synchronizing data PLO SYNC included in the AND gate output S12, causes a PLL oscillation circuit provided in it to perform a synchronous operation, thereby to output a reference clock signal S14. The reference clock signal S14 is applied to the modem unit 23, and it is further applied to the sequencer 21.

Furthermore, the data synchronizer 29, in response to the byte synchronizing data BYTE SYNC included in the AND gate output S13, applies the identification data ID and sub read/write data $DATA_k$ following the byte synchronizing data BYTE SYNC, as a reading read/write data S16, to a demodulator 31 in the modem unit 23.

The modem unit 23 performs a modem operation in synchronization with the reference clock signal S14 provided by the data synchronizer 29. That is, the demodulator 31 demodulates the reading read/write data S16 is demodulated into a read signal S17, which is applied to the sequencer 21, as a result of which it is outputted, as read information $INF_R$, by the sequencer 21.

Thus, the sequencer 21 writes the write information $INF_W$ on the disk 15 which has been externally applied to the read/write data processing circuit 11, or provides the read information $INF_R$ read out of the disk 15 as the output of the read/write data processing circuit 11.

When, in the read mode, the disk 15 being turned comes to the position where the magnetic head 13 passes the border between adjacent sectors, a sector pulse S19 is applied to the sequencer 21, so that the sequencer 21 performs a sequence operation in such a manner that the sequencer 21, in synchronization with a sector of the disk 15, fetches the corresponding read signal S17.

The sector pulse S19 is formed and forwarded to the sequencer 21 when a sector pulse detecting circuit 50 detects a particular pattern formed on the disk DK.

In the case where the outer record area track $TR_{OUT}$ is scanned by the magnetic head 13, of the read signal S11 read by the magnetic head 13, the servo signal (FIG. 9) read from the first and second servo information record zones $SVO_{OUTk1}$ and $SVO_{OUTk2}$ are supplied from the read amplifier circuit 26 to a servo circuit 41. In response to the servo signal, the servo circuit 41 supplies a servo drive signal S21 to a voice coil motor 51 adapted to drive an arm on which the magnetic head is mounted. Thus, the magnetic head 13 is positioned on the aimed track.

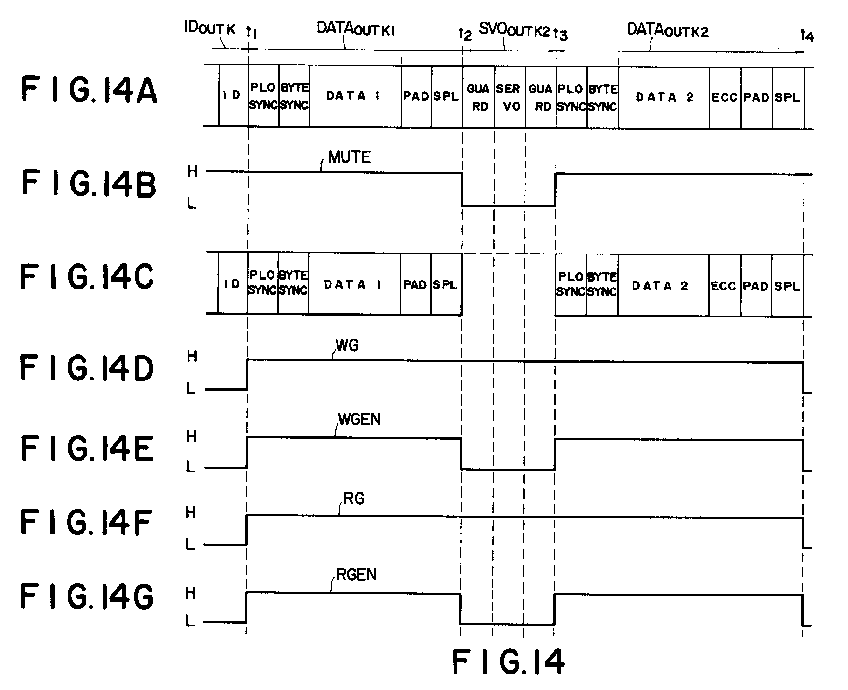

Furthermore, according to the servo data, the servo circuit 41 supplies a mute signal MUTE to a control signal generating circuit 42 which is set to "L" level from "H" level as shown in the part (B) of FIG. 14 for the period of time (the part (A) of FIG. 14) that the magnetic head 13 scans the part of the first and second servo information record zones $SVO_{OUTk1}$ and $SVO_{OUTk2}$ in which the servo data SERVO is recorded.

The mute signal MUTE is produced in order to prevent the occurrence of difficulties that, when the read/write data processing circuit 11 is in the write mode, the servo signals SERVO are erased from the first and second servo information record zones $SVO_{OUTk1}$ and $SVO_{OUTk2}$ by being overwritten by other data, and that the data synchronizer 29 is operated erroneously because a servo signal is inputted which is different in signal type from ordinary data when the servo signals SERVO of the first and second servo information record zones $SVO_{OUTk1}$ and $SVO_{OUTk2}$ are fetched into the read/write data processing circuit 11. As shown in FIG. 14, the control signal generating circuit 42 provides a write inhibit signal WGEN (the part (E) of FIG. 14) or a read inhibit signal RGEN (the part (G) of FIG. 14) according to the mute signal MUTE.

Now, the operation will be described that the sequencer 21 sequentially processes the data corresponding to the sector $SECT_{OUTk}$ formed on the outer record area track $TR_{OUT}$ of the disk 15.

In a write mode, in the sequencer 21 (the parts (A) and (C) of FIG. 14), when the identification information record zone $ID_{OUTk}$ of the disk 15 is scanned, the end time instant $t_2$ of the first data information record zone $DATA_{OUTk1}$ written in the identification information record zone $ID_{OUTk}$ and the start time instant $t_3$ of the second data information record zone $DATA_{OUTk2}$ are stored as first and second reference clock numbers, respectively. Simultaneously when the scanning of the first data information record zone $DATA_{OUTk1}$ is started at the time instant $t_1$, the counting of the reference clock signal S14 provided by the data synchronizer 29 is started.

Thus, the sequencer 21 counts the first reference clock number stored according to the reference clock signal S14, and, upon completion of the counting operation; i.e., at the time instant $t_2$, suspends the sequential processing operation; that is, the data processing step is not advanced.

The data processing operation which is suspended is for instance the counting of the error correcting code ECC added to the end of the data.

Furthermore, in the control signal generating circuit 42, the mute signal MUTE (the part (B) of FIG. 14) outputted by the servo circuit, and the write gate signal WG (the part (D) of FIG. 14) are ANDed. The write gate signal WG is raised to "H" level when the disk 15 comes to the rotational position of the first data information record zone $DATA_{OUTk1}$, second servo information record zone $SVO_{OUTk2}$ and second data information record zone $DATA_{OUTk2}$. As shown in the part (E) of FIG. 14, the result of this operation is outputted as a write inhibit signal WGEN (= WG· MUTE) is outputted. With the write inhibit signal WGEN, the write amplifier circuit 25 is placed in write unable state, so that the write signal S3 cannot be supplied to the magnetic head 13.

The mute signal MUTE is produced with the timing that the disk 15 is at the rotational position of the record zone of the servo signal SERVO (the parts (A) and (B) of FIG. 14). Thus, by inhibiting the writing of the write signal S3 over the record zone of the servo signal SERVO, the servo signal SERVO written on the disk 15 is protected.

Thus, the read/write data processing circuit 11 performs a protective operation for the servo signal SERVO with the timing that the second servo information record zone $SVO_{OUTk2}$ passes the magnetic head 13 during the period of time of from $t_2$ to $t_3$ (FIG. 14) in the write mode, and simultaneously controls the sequencer 21 so that the latter may not go to the following processing step.

During this pause period, the sequencer 21 continuously carried out the reference clock counting operation according to the reference clock signal S14. Thereafter, at the time instant t that the second reference clock number read out of the identification information record zone $ID_{OUTk}$ in advance is counted up, the sequencer 21 eliminates the suspension of the sequential operation and starts the following processing step, so that the second sub read/write data DATA is transmitted as the write signal S1.

In this case, the control signal generating circuit 42 raises to "H" level the write inhibit signal WGEN applied to the write amplifier circuit 25 (the part (E) of FIG. 14), as a result of which the second sub read/write data DATA2; i.e., the write data S2 is supplied through the write amplifier circuit 25, as the write signal S3, to the magnetic head 13, whereby the second sub read/write data DATA2 is written in the second data information record zone $DATA_{OUTk2}$ of the disk 15.

Upon completion of the provision all data to be recorded in the second data information record zone $DATA_{OUTk2}$ by the sequencer 21 at the time instant $t_4$ in FIG. 14, the sequencer 21 sets the write gate signal WG (the part (D) of FIG. 14) to "L" level, as a result of which the write inhibit signal WGEN (the part (E) of FIG. 14) with the write gate signal WG being one of the AND conditions is set to "L" level. Thus, the operation of writing data in the sector $SECT_{OUTk}$ (k = 1, 2,.. and K) has been accomplished.

If summarized, in the write mode, the disk memory system 10 can positively record the data given in the data format shown in FIGS. 8 through 12 in the sectors according to the position information of the first and second servo information record zone $SVO_{OUTk1}$ and $SVO_{OUTk2}$ recorded in the identification information record zone $ID_{OUTk}$.

On the other hand, in a read mode, the sequencer 21 stores as first and second reference clock numbers the end time instant $t_2$ of the first data information record zone $DATA_{OUTk1}$ and the start time instant $t_3$ of the second data information record zone $DATA_{OUTk2}$ written in the identification information record zone $ID_{OUTk}$ when the latter $ID_{OUTk}$ is scanned, and the sequencer starts the counting of the reference clock outputted by the data synchronizer 29 simultaneously when the scanning of the first data information record zone $DATA_{OUTk1}$ is started.

Thus, at the time instant $t_2$ the first reference clock number stored in advance is counted up by the sequencer 21, the latter 21 suspends the sequential processing operation; that is, the data processing procedure is stopped.

In the control signal generating circuit 42, the mute signal MUTE (the part (B) of FIG. 14) provided by the servo circuit 41 and a read gate signal RG (the part (F) of FIG. 14) are ANDed. The read gate signal RG is raised to "H" level when the rotational position of the first data information record zone $DATA_{OUTk1}$, second servo information record zone $SVO_{OUTk2}$, and second data information record zone $DATA_{OUTk2}$ is reached. The result of operation is outputted as a read inhibit signal RGEN (= RG·MUTE).

The read inhibit signal RGEN is set to "L" level (the part (G) of FIG. 9) with the timing that the servo signal SERVO (the part (A) of FIG. 9) of the insertion servo signal $SVH_{OUTk2}$ is read out of the disk 15. The "L" level read inhibit signal RGEN is applied to the AND gate circuit 28 to close the latter, as a result of which the read data S12 outputted by the peak detecting circuit 27 is not applied to the data synchronizer 29, whereby the latter 29 is prevented from being operated erroneously.

This is because the servo data SERVO is of a particular signal type that the servo circuit 41 is liable to respond to it, and therefore if the servo data SERVO is applied to the data synchronizer 29 as it is, then the latter 29 may operate erroneously.

When the AND gate circuit 28 is closed, the read data S12 is not supplied to the data synchronizer 29, and the reference clock signal S14 is not provided either, because it is outputted according to the read data S12.

Accordingly, during this period, the reference clock generating section provided in the data synchronizer 29 applies an auxiliary reference clock signal, as a reference clock signal S14, to the sequencer 21, so that the latter 21 counts the auxiliary reference clock signal successively after the reference clock signal S14 with respect to the first data information record zone $DATA_{OUTk1}$.

Thus, at the time instant $t_3$ that the second reference clock number stored with the identification information record zone $ID_{OUTk}$ in advance is counted up, the sequencer 21 eliminates the suspension of the sequential operation, and starts the following processing steps, whereby reading the second sub read/write data DATA2 as the read signal S17 is started.

When all the data have been read from the second data information record zone $DATA_{OUTk2}$ at the time instant $t_4$ (FIG. 14), the sequencer 21 sets the read gate signal RG (the part (F) of FIG. 14) to "L" level, as a result of which the read inhibit signal RGEN (the part (G) of FIG. 14) is also set to "L" with the read gate signal RG being one of the ANDing conditions. Thus, the operation of reading data from the sector $SECT_{OUTk}$ (k = 1, 2,... and K) has been accomplished.

The response of the disk memory system 10 to the insertion servo signal SVH of the second servo information record zone $SVO_{OUTk2}$ has been described. Similarly, with respect to the servo data of the first servo information record zone $SVO_{OUTk1}$, the servo circuit 41 applies the mute signal MUTE to the control signal generating circuit 42, so that the servo signal protecting operation is carried out in the write mode, and the inhibition of the application of the servo data to the data synchronizer 29 is performed in the read mode.

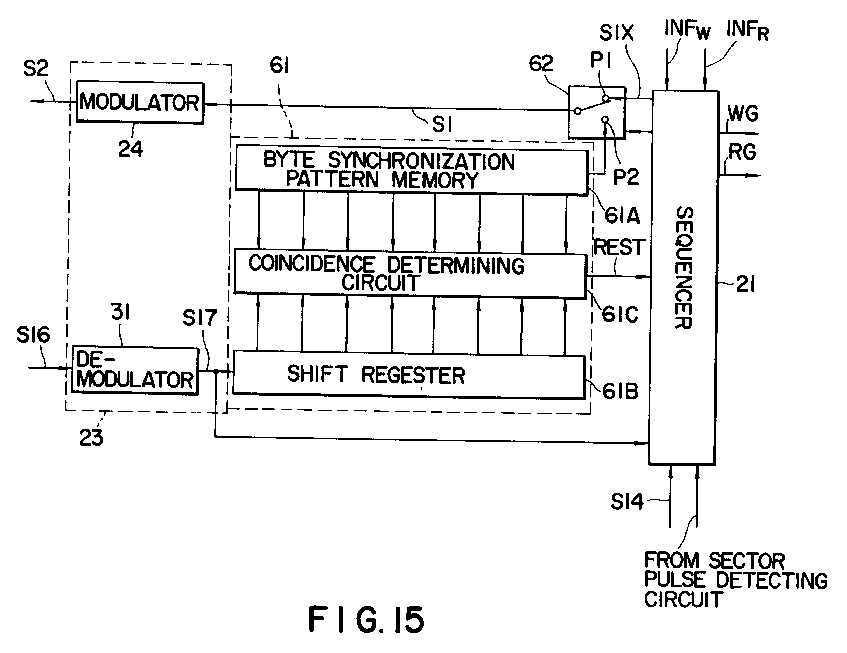

Now, a byte synchronization data processing circuit 61 and a switch circuit 62 will be described with reference to FIG. 15, which perform the writing and reading of the identification data ID and the byte synchronization data BYTE SYNC which is provided immediately before the first and second sub read/write data DATA1 and DATA2 for byte synchronization of those data.

In the byte synchronization data processing circuit 61, a byte synchronization data pattern of 1 byte for instance is stored in a byte synchronization data pattern memory 61A. When, under the condition that an original write signal S1X, record data corresponding to each sector, is transmitted, as a write signal S1, through a first input terminal P1 of a switch circuit 62 from the sequencer 21, the timing of writing the byte synchronization data BYTE SYNC (the part (A) of FIG. 14) occurs, the byte synchronization data is read in a time-series mode from a byte synchronization data pattern memory 61A, and transmitted as the write signal S1 to the modulator 24 through a second input terminal of the switch circuit 61.

In this operation, the modulator 24 writes the write data S2 including the byte synchronization data BYTE SYNC in the disk 15 through the write amplifier circuit 25 and the magnetic head 13.

On the other hand, in the read mode, the byte synchronization data BYTE SYNC read as part of the read data S11 from the disk 15 is supplied, as a read signal S17, to the byte synchronization data processing circuit 61 through the read amplifier circuit 26, the peak detecting circuit 27, the AND gate circuit 28, the data synchronizer 29, and the demodulator 31 of the modem unit 23.

In the case of the above-described embodiment, the byte synchronization data BYTE SYNC of the read signal S17 is fetched by a shift register 61B of 1 byte, and it is determined by a coincidence decision circuit 61C whether or not the bits are coincided in data with those of the byte synchronization data pattern in the byte synchronization data pattern memory 61A. Upon coincidence of the bits, the coincidence decision circuit 61C applies a byte timing signal BT to the sequencer 21.

In this case, the sequencer 21 receives the read signal S17 directly from the demodulator 31, and, carries out, after the provision of the byte timing signal BT, the sequential processing operation while accurately detecting the bytes of the read signal S17.

With the arrangement shown in FIG. 15, with respect to each sector of the disk 15, the byte synchronization data can be read and written at three positions.

The response of the disk memory system to the outer record track $TR_{OUT}$ of the disk DK has been described. Similarly, with respect to the inner record track $TR_{IN}$, the position information of the second and third servo information record zones $SVO_{INm2}$ and $SVO_{INm3}$ inserted to divide the data information record zone into three parts is recorded in the identification information record zone $ID_{INm}$ in advance, and the sequencer 21 operates on the position information to suspend the sequential operation or start it again.

Thus, although the outer and inner record area tracks $TR_{OUT}$ and $TR_{IN}$ are different in sector interval and in the number of division of a data information record zone, data can be positively written in the data information record zones thereof.

As was described above, in each sector a plurality of data information zones are provided by insertion of the servo information record zone or zones, and the position information of the servo information record zone or zones is recorded in the identification information record zone $ID_{OUTk}$ or $ID_{INm}$ in advance which is located at the head of the sector. Therefore, even in the case where the numbers of servo information record zones provided in the sectors are different, data can be positively written in or read from the data information record zones.

The sectors formed on the outer and inner record area tracks $TR_{OUT}$ and $TR_{IN}$ with different sector forming angles $\beta$ and $\alpha$ (FIG. 6) are divided with the servo information record zones different in number, whereby the servo information record zones formed on the outer and inner record area tracks $TR_{OUT}$ and $TR_{IN}$ can be arranged on straight lines extended radially of the disk DK (FIG. 6). Hence, with the outer and inner record area tracks $TR_{OUT}$ and $TR_{IN}$, servo data can be obtained with the same timing; that is,. the servo signal sampling rate and sampling timing can be the same.

Accordingly, the outer and inner record area tracks $TR_{OUT}$ and $TR_{IN}$ can be made equal in data record density without provision of a plurality of servo circuits 41 for the disk memory system 10, with the result that the data record density is greatly increased.

Since the position information of the servo information record zones is recorded in the identification information record zone. Therefore, data can be positively written in or read from the disk even with a data format in which the positions of servo information record zones deviate depending on the sectors.

Other Embodiments

(1) In the above-described embodiment, by way of example sixty-three (63) and forty-two (42) sectors are formed on the outer and inner record area tracks $TR_{OUT}$ and $TR_{IN}$, respectively, and in correspondence to the numbers of sectors, the data transfer rates of the outer and inner record area tracks are set to 15 Mbps and 10 Mbps, respectively, and the sector forming angle of the inner record area track $TR_{IN}$ is made 1.5 times that of the outer record area track $TR_{OUT}$, so that the outer and inner tracks are made equal in data record density to each other. However, the invention is not limited thereto or thereby. That is, in the case where the numbers of sectors are set to others, the same effects can be obtained by selecting the data recording rates and the sector forming angles of the outer and inner record tracks according to the numbers of sectors thus set.

(2) In the above-described embodiment, two record areas are formed on a disk; however, the invention is not limited thereto or thereby. That is, in the case also where more than two record areas are formed on a disk, the same effects can be obtained by selecting data recording rates and sector forming angles so that the sectors formed be equal in data record density to one another, and by arranging the servo information record zones radially of the disk.

(3) In the embodiment shown in FIG. 13, the byte data processing circuit 61 is provided between the sequencer 21 and the modem unit 23. However, it may be provided on the side of the read/write circuit 12 of the modem unit 23.

In this case, the same effects as those in the above-described embodiment can be obtained with the timing of operation of the modem unit 23 maintained accurately shifted from that of the sequencer 21.

(4) In the above-described embodiment, the start and end positions of the servo information record zones are recorded as position information in the identification information record zone $ID_{OUTk}$ or $ID_{INm}$; however, the invention is not limited thereto or thereby. That is, the device may be so designed that only the start positions of the servo information record zones are recorded, and the end information of the servo information record zones is recorded at the ends of the servo information record zones.

## Claims

1. A disk memory system comprising:

transducer means (13) for reading and writing information on a disc;

at least one disk medium (15) having a plurality of concentrically and radially displaced areas ($TR_{IN}$, $TR_{OUT}$) each of which has a plurality of concentric tracks,

data transfer rates for said areas being selected in accordance with radial offset from the center of said disk medium,

each of said concentric data tracks being divided into plural data sectors (SECT) and plural servo zones (SVO) therebetween,

said concentric data tracks for each of said area being divided into said data sectors different in number and said servo zones therebetween, characterized in, that

each of said data sectors has identification information (PLO SYNC, BYTE SYNC, ID) which is prerecorded and only read by said transducer means, and data information (DATA) and error correction (ECC) information both of which are recorded and read by said transducer means together,

each of said servo zones has servo information which is prerecorded and only read by said transducer means,

each of said data sectors is further divided into one identification record zone ($ID_{IN}$ ; $ID_{OUT}$) having identification data (ID) and plural sub-data sectors ($DATA_{IN}$ ; $DATA_{OUT}$) into which said data information and error correction information are distributed,

additional servo zones are provided between said sub-data sectors and have additional servo information therein which is prerecorded and only read by said transducer means;

said data sectors for each area are divided into said sub-data sectors different in number in such a manner that positions of said servo zones and additional servo zones are radially aligned throughout said areas;

the system further comprises:

spindle motor means (14) for rotating said disc medium at a predetermined angular velocity;

positioning means (51) for positioning said transducer means on a selected one of said concentric tracks; and

positioning control (41) means for receiving said servo information and said additional servo information read by said transducer means and for controlling said positioning means so that said transducer means is positioned precisely on said selected one of said concentric tracks.

2. A disk memory system as claimed in claim 1, in which said servo information and additional servo information are identical.

3. A disk memory system as claimed in claim 1, in which each of said data sectors is divided into one identification record zone which includes the whole of said identification information and two sub data sectors ($DATA_{IN}$ ; $DATA_{OUT}$) one of which includes a part of said data information, and the other of which includes the remaining part of said data information and the whole of said error correction information.

4. A disk memory system as claimed in claim 1, in which said transducer means encounters said servo zones and said additional servo zones at a constant frequency.

5. A disk memory system as claimed in claim 1, in which said identification information includes information on relative positions of said additional servo zones in each of said data sectors.

## Patentansprüche

1. Plattenspeichersystem mit:
   - einer Wandlereinrichtung (13) zum Lesen und Schreiben von Information auf einer Platte;
   - mindestens einem Plattenmedium (15) mit mehreren konzentrisch angeordneten, radial gegeneinander versetzten Bereichen ($TR_{IN}$, $TR_{OUT}$), von denen jeder mehrere konzentrische Spuren enthält;
   - wobei die Datenübertragungsraten für die Bereiche abhängig vom radialen Versatz gegenüber dem Zentrum des Plattenmediums ausgewählt ist;
   - wobei jede der konzentrischen Datenspuren in mehrere Datensektoren (SECT) und mehrere dazwischenliegende Servozonen (SVO) unterteilt sind;
   - wobei die konzentrischen Datenspuren für jeden der Bereiche in Datensektoren unterteilt sind, die verschiedene Anzahlen haben, mit den dazwischenliegenden Servozonen;

   dadurch gekennzeichnet, daß
   - jeder der Datensektoren Kennungsinformation (PLO SYNC, BYTE SYNC, ID), die voraufgezeichnet ist und nur von der Wandlereinrichtung gelesen wird, sowie Dateninformation (DATA) und Fehlerkorrekturinformation (ECC) enthält, die beide gemeinsam von der Wandlereinrichtung aufgezeichnet und gelesen werden;

- jede der Servozonen Servoinformation enthält, die voraufgezeichnet ist und nur von der Wandlereinrichtung gelesen wird;
- jeder der Datensektoren weiter in eine Kennungsaufzeichnungszone ($ID_{IN}$; $ID_{OUT}$) mit Kennungsdaten (ID) und mehrere Unterdatensektoren ($DATA_{IN}$; $DATA_{OUT}$) unterteilt ist, in die die Dateninformation und die Fehlerkorrekturinformation verteilt sind;
- zusätzliche Servozonen zwischen den Unterdatensektoren vorhanden sind und sie zusätzliche Servoinformation beinhalten, die voraufgezeichnet ist und nur von der Wandlereinrichtung gelesen wird;
- die Datensektoren für jeden Bereich in die Unterdatensektoren mit verschiedenen Anzahlen in solcher Weise unterteilt sind, daß die Positionen der Servozonen und der zusätzlichen Servozonen über alle Bereiche hinweg in radialer Richtung angeordnet sind;

wobei das System ferner folgendes aufweist:
- eine Plattenantriebsmotor-Einrichtung (14) zum drehenden Antreiben des Plattenmediums mit einer vorgegebenen Winkelgeschwindigkeit;
- eine Positioniereinrichtung (51) zum Positionieren der Wandlereinrichtung auf einer ausgewählten Spur unter den konzentrischen Spuren und
- eine Positionssteuereinrichtung (41), die die Servoinformation und die zusätzliche Servoinformation enthält, wie sie von der Wandlereinrichtung gelesen werden, um die Positioniereinrichtung so anzusteuern, daß die Wandlereinrichtung genau auf der ausgewählten Spur unter den konzentrischen Spuren positioniert wird.

2. Plattenspeichersystem nach Anspruch 1, bei dem die Servoinformation und die zusätzliche Servoinformation identisch sind.

3. Plattenspeichersystem nach Anspruch 1, bei dem jeder der Datensektoren in eine Kennungsaufzeichnungszone, die die gesamte Kennungsinformation enthält, und zwei Unterdatensektoren ($DATA_{IN}$; $DATA_{OUT}$) unterteilt ist, von denen der eine einen Teil der Dateninformation enthält und der andere den restlichen Teil der Dateninformation und die gesamte Fehlerkorrekturinformation enthält.

4. Plattenspeichersystem nach Anspruch 1, bei dem die Wandlereinrichtung mit konstanter Frequenz auf die Servozonen und die zusätzlichen Servozonen trifft.

5. Plattenspeichersystem nach Anspruch 1, bei dem die Kennungsinformation Information zu Relativpositionen der zusätzlichen Servozonen in jedem der Datensektoren enthält.

**Revendications**

1. Système de mémoire à disque comprenant :

des moyens de transduction (13) pour lire et écrire une information sur un disque ;

au moins un support d'information de disque (15) comportant une pluralité de zones déplacées concentriquement et radialement ($TR_{IN}$, $TR_{OUT}$), chacune d'entre elles comportant une pluralité de pistes concentriques,

des débits de transfert de données pour lesdites zones étant sélectionnés selon un décalage radial par rapport au centre dudit support de disque,

chacune desdites pistes de données concentriques étant divisée en plusieurs secteurs de données (SECT) et plusieurs zones d'asservissement (SVO) entre elles,

lesdites pistes de données concentriques pour chaque dite zone étant divisées en lesdits secteurs de données qui différent en nombre et en lesdites zones d'asservissement entre elles, caractérisé en ce que :

chacun desdits secteurs de données comporte une information d'identification (PLO SYNC, BYTE SYNC, ID) qui est préenregistrée et seulement lue par lesdits moyens de transduction, et une information de données (DATA) et une information de correction d'erreur (ECC), toutes les deux étant enregistrées et lues par lesdits moyens de transduction ensemble,

chacune desdites zones d'asservissement comporte une information d'asservissement qui est préenregistrée et seulement lue par lesdits moyens de transduction,

chacun desdits secteurs de données est en outre divisé en une zone d'enregistrement d'identification ($ID_{IN}$ ; $ID_{OUT}$) comportant des données d'identification (ID) et en plusieurs secteurs de sous-données ($DATA_{IN}$ ; $DATA_{OUT}$) dans lesquels ladite information de données et ladite information de correction d'erreur sont distribuées,

des zones d'asservissement supplémentaires sont prévues entre lesdits secteurs de sous-données et ils comportent une information d'asservissement supplémentaire dedans qui est préenregistrée et seulement lue par lesdits moyens de transduction ;

lesdits secteurs de données pour chaque zone sont divisés en lesdits secteurs de sous-données qui diffèrent en nombre de manière à ce que les positions desdites zones d'asservissement et desdites zones d'asservissement supplémentaires soient alignées radialement sur l'ensemble desdites zones ;

le système comprend en outre :

des moyens de moteur à broche (14) pour faire tourner ledit support de disque selon une vitesse angulaire prédéterminée ;

des moyens de positionnement (51) pour positionner lesdits moyens de transduction sur l'une sélectionnée desdites pistes concentriques ; et

des moyens de commande de positionnement (41) pour recevoir ladite information d'asservissement et ladite information d'asservissement supplémentaire lues grâce audits moyens de transduction et pour commander lesdits moyens de positionnement de manière à ce que lesdits moyens de transduction soient positionnés de façon précise sur l'une dite sélectionnée desdites pistes concentriques.

2. Système de mémoire à disque selon la revendication 1, dans lequel ladite information d'asservissement et ladite information d'asservissement supplémentaire sont identiques.

3. Système de mémoire à disque selon la revendication 1, dans lequel chacun desdits secteurs de données est divisé en une zone d'enregistrement d'identification qui inclut la totalité de ladite information d'identification et deux secteurs de sous-données ($DATA_{IN}$ ; $DATA_{OUT}$), l'un d'entre eux incluant une partie de ladite information de données, et dont l'autre inclut la partie restante de ladite information de données et la totalité de ladite information de correction d'erreur.

4. Système de mémoire à disque selon la revendication 1, dans lequel lesdits moyens de transduction rencontrent lesdites zones d'asservissement et lesdites zones d'asservissement supplémentaires à une fréquence constante.

5. Système de mémoire à disque selon la revendication 1, dans lequel ladite information d'identification inclut une information concernant des positions relatives desdites zones d'asservissement supplémentaires dans chacun desdits secteurs de données.

FIG.1

FIG.2

FIG.3

**FIG. 4**

**FIG. 5**

14

SECT<sub>OUT</sub> K

SECT<sub>IN</sub> M

SECT<sub>OUT</sub>(K-I)

SECT<sub>OUT</sub> I

SECT<sub>IN</sub> I

DK

SECT<sub>OUT</sub> 2

SECT<sub>IN</sub>(M-I)

SECT<sub>IN</sub> 2

SECT<sub>OUT</sub>(K-2)

SECT<sub>OUT</sub> 3

α β

SECT<sub>IN</sub>(M-2)

SECT<sub>OUT</sub> 4

TR<sub>OUT</sub>

SECT<sub>IN</sub>3

TR<sub>IN</sub>

## F I G. 6

SVO<sub>OUT</sub> I2

SVO<sub>OUT</sub> K2

SVO<sub>OUT</sub> II

SVO<sub>OUT</sub> KI

SVO<sub>IN</sub> I2

SVO<sub>IN</sub> M3

SVO<sub>IN</sub> M2

SVO<sub>IN</sub> II

SVO<sub>IN</sub> I3

SVO<sub>OUT</sub>(K-I)2

SVO<sub>OUT</sub> 2I

SVO<sub>IN</sub> MI

SVO<sub>IN</sub> 2I

SVO<sub>OUT</sub>(K-I)I

SVO<sub>OUT</sub> 22

SVO<sub>IN</sub>(M-I)3

SVO<sub>IN</sub> 22

SVO<sub>OUT</sub> 3I

SVO<sub>IN</sub>(M-I)2

SVO<sub>IN</sub> 23

SVO<sub>OUT</sub> 32

SVO<sub>IN</sub>3I

SVO<sub>OUT</sub> 4I

SVO<sub>IN</sub>(M-I)I

SVO<sub>IN</sub> 32

SVO<sub>IN</sub>33

## F I G. 7

15

# FIG.8

SECT$_{OUT K}$  SECT$_{OUT(K+1)}$

SVO$_{OUT K1}$  DATA$_{OUT K1}$  DATA$_{OUT K2}$  ID$_{OUT(K+1)}$  SVO$_{OUT(K+1)2}$

ID$_{OUT K}$  SVO$_{OUT K2}$  SVO$_{OUT(K+1)1}$  DATA$_{OUT(K+1)1}$  DATA$_{OUT(K+1)2}$

# FIG.9

SECT$_{OUT K}$

SVO$_{OUT K1}$  ID$_{OUT K}$  DATA$_{OUT K1}$  SVO$_{OUT K2}$  DATA$_{OUT K2}$

| ISG | PLO SYNC | BYTE SYNC | I D | PLO SYNC | BYTE SYNC | DATA 1 | PAD | SPL | SVH | PLO SYNC | BYTE SYNC | DATA 2 | ECC | PAD | SPL |

# FIG.10

SVO$_{OUT K2}$(SVO$_{IN m2}$ , SVO$_{IN m3}$)

| GUARD | SERVO | GUARD |

SVH

EP 0 402 912 B1

$SECT_{INm}$ $SECT_{IN(m+1)}$

$SVO_{INm1}$ $DATA_{INm1}$ $DATA_{INm2}$ $DATA_{INm3}$ $ID_{IN(m+1)}$ $SVO_{IN(m+1)2}$ $SVO_{IN(m+1)3}$

$ID_{INm}$ $SVO_{INm2}$ $SVO_{INm3}$ $SVO_{IN(m+1)1}$ $DATA_{IN(m+1)1}$ $DATA_{IN(m+1)2}$ $DATA_{IN(m+1)3}$

**F I G. 11**

$SECT_{INm}$

$SVO_{INm1}$ $ID_{INm}$ $DATA_{INm1}$ $SVO_{INm2}$ $DATA_{INm2}$ $SVO_{INm3}$ $DATA_{INm3}$

| ISG | PLO SYNC | BYTE SYNC | I D | PLO SYNC | BYTE SYNC | DATA 1 | PAD | SPL | SVH | PLO SYNC | BYTE SYNC | DATA 2 | PAD | SPL | SVH | PLO SYNC | BYTE SYNC | DATA 3 | ECC | PAD | SPL |

**F I G. 12**

F I G. 13

IDoutK t₁  DATAoutK1  t₂ SVOoutK2 t₃  DATAoutK2  t₄

**FIG.14A**

| ID | PLO SYNC | BYTE SYNC | DATA 1 | PAD | SPL | GUA RD | SER VO | GUA RD | PLO SYNC | BYTE SYNC | DATA 2 | ECC | PAD | SPL |

**FIG.14B**  H L  MUTE

**FIG.14C**

| ID | PLO SYNC | BYTE SYNC | DATA 1 | PAD | SPL | | | | PLO SYNC | BYTE SYNC | DATA 2 | ECC | PAD | SPL |

**FIG.14D**  H L  WG

**FIG.14E**  H L  WGEN

**FIG.14F**  H L  RG

**FIG.14G**  H L  RGEN

FIG.14

FIG.15